# EUROPEAN PATENT APPLICATION

(11) **EP 4 837 885 A1**
(43) Date of publication of application: **11.11.2026**
(21) Application number: 25754705.9
(22) Date of filing: 04.02.2025
(51) Int. Cl.: C02F 1/28, B01J 20/20

(54) **MOLDED BODY AND METHOD FOR REMOVING PERFLUOROALKYL COMPOUNDS AND/OR POLYFLUOROALKYL COMPOUNDS**

(30) Priority: 16.02.2024 JP 2024021875
(71) Applicant: Kuraray Co., Ltd., Kurashiki-shi, Okayama 710-0801 (JP)
(72) Inventor: KAKITA, Yuki, Bizen-shi, Okayama 705-0025 (JP); HANAMOTO, Tetsuya, Bizen-shi, Okayama 705-0025 (JP); YOSHINOBU, Hiroe, Bizen-shi, Okayama 705-0025 (JP); ISHIKAWA, Kenichi, Bizen-shi, Okayama 705-0025 (JP); UKAI, Yu, Bizen-shi, Okayama 705-0025 (JP); TAGUCHI, Yasufumi, Bizen-shi, Okayama 705-0025 (JP)
(74) Representative: Müller-Boré & Partner Patentanwälte PartG mbB
(86) International application number: PCT/JP2025/003531
(87) International publication number: WO 2025/173589

(57) **Abstract**

A molded body according to the present application contains activated carbon and a binder, wherein a volume of voids having diameters in the range of 1 µm to 30 µm in the molded body measured by mercury intrusion porosimetry is 20% or more of a volume of all voids in the molded body measured by mercury intrusion porosimetry.

## Description

### Technical Field

The present invention relates to a molded body containing activated carbon and a binder, and a method for removing a fluorine-containing organic compound (per- and polyfluoroalkyl substances (PFAS)) using the molded body.

### Background Art

In recent years, with an increased concern about safety and health related to the water quality of tap water, removal of various harmful substances has been desired.

Fluorine-containing organic compounds have unique properties (excellent in heat resistance and chemical resistance, usable under harsh conditions, no light absorption property, and the like) that cannot be realized by other substances. Therefore, fluorine-containing organic compounds have been used in various applications such as surfactants, emulsifiers, water repellents, fire extinguishing agents, waxes, carpet cleaning agents, and coating agents. Recently, fluorine-containing organic compounds are often used as functional materials such as surface treatment agents for semiconductors or fuel cell constituent materials.

However, researchers, mainly in the United States and Canada, started to report that some fluorine-containing organic compounds have accumulated in environmental water and in wildlife bodies for several years. Typical compounds thereof are perfluorocarboxylic acids typified by perfluorooctanoic acid (PFOA: C₇F₁₅COOH) and perfluorosulfonic acids typified by perfluorooctanesulfonic acid (PFOS: C₈F₁₇SO₃H). After that, researchers in Europe and Japan also entered the environmental analysis research, and as a result, the research revealed that these compounds exist in the environment on a global scale including our country.

In response to such a situation, efforts have started to reduce the environmental risk of fluorine-containing organic compounds (perfluoroalkyl compound and/or polyfluoroalkyl compound (hereinafter, also referred to as "PFAS")). For example, Patent Literature 1 describes a carbonaceous material having high PFAS removal performance, which can be used also in water purifier applications.

### Citation List

### Patent Literature

Patent Literature 1: JP 7060772 B

### Summary of Invention

An object of the present invention is to provide a molded body capable of satisfactorily removing a fluorine-containing organic compound (PFAS).

As a result of intensive studies to solve the above problems, the present inventors have reached the present invention.

A molded body according to a first aspect of the present invention is a molded body containing activated carbon and a binder, wherein a volume of voids having diameters in the range of 1 µm to 30 µm in the molded body measured by mercury intrusion porosimetry is 20% or more of a volume of all voids in the molded body measured by mercury intrusion porosimetry.

A method for removing a perfluoroalkyl compound and/or a polyfluoroalkyl compound according to a second aspect of the present invention includes using the molded body according to the first aspect of the present invention.

### Brief Description of Drawings

[FIG. 1] FIG. 1 is a perspective view showing an example of a mold for preparing a molded body in the present embodiment.
[FIG. 2] FIG. 2 is a perspective view showing an example of a molded body in the present embodiment obtained using the mold of FIG. 1.
[FIG. 3] FIG. 3 is a graph showing the particle size distributions (cumulative volume (%)) of powdered activated carbons used in Examples 1 to 7 and Comparative Example 1.
[FIG. 4] FIG. 4 is a view for explaining how to cut out a sample at the time of measuring a volume of voids of a molded body.
[FIG. 5] FIG. 5 is a perspective view showing an example of an automatic grinder for producing a molded body.

### Description of Embodiments

Patent Literature 1 describes a technique for removing PFAS by using a carbonaceous material such as activated carbon with an increased degree of activation or a water purification filter containing the carbonaceous material.

In general, when the carbonaceous material powder is used as it is as a water purification filter, there is a problem that it is difficult to achieve both improvement in removal efficiency of a target substance and suppression of an increase in pressure loss. Therefore, when the carbonaceous material powder is used as a water purification filter, it is known that the carbonaceous material is usually formed into a molded body shape by blending a fibrous binder or the like in the carbonaceous material powder. With such a molded body shape, the carbonaceous material can be widely used as a small water purification filter. Therefore, from the viewpoint of physical properties or configuration of the molded body, it is preferable to obtain a molded body with which PFAS can be more efficiently removed.

As a result of intensive studies by the present inventors, it has been found that, in a molded body containing activated carbon and a binder, a molded body capable of satisfactorily removing PFAS can be obtained by controlling the proportion of the volume of voids having diameters in the range of 1 µm to 30 µm in the molded body measured by mercury intrusion porosimetry to a predetermined value or more.

Hereinafter, embodiments of the present invention will be described in detail. The scope of the present invention is not limited to the embodiment described herein, and various modifications can be made without impairing the gist of the present invention.

### <Molded body>

The molded body in the present embodiment is a molded body containing activated carbon and a binder, wherein the volume of voids having diameters in the range of 1 µm to 30 µm in the molded body measured by mercury intrusion porosimetry is 20% or more of the volume of all voids in the molded body measured by mercury intrusion porosimetry.

### [Physical properties of molded body]

In the molded body in the present embodiment, the volume of voids having diameters in the range of 1 µm to 30 µm in the molded body measured by mercury intrusion porosimetry (hereinafter, also simply referred to as "volume of voids having diameters in the range of 1 µm to 30 µm of a molded body") is 20% or more of the volume of all voids in the molded body measured by mercury intrusion porosimetry (hereinafter, also simply referred to as "total volume of voids of a molded body"). That is, the proportion of the volume of voids having diameters in the range of 1 µm to 30 µm of the molded body is 20% or more.

In the present embodiment, since the proportion of the volume of voids having diameters in the range of 1 µm to 30 µm of the molded body is 20% or more, PFAS can be efficiently and satisfactorily removed. This is because the PFAS molecules efficiently come into contact with narrow voids having diameters in the range of 1 µm to 30 µm between activated carbon particles in the molded body and are adsorbed. The volume of pores of the activated carbon itself contained in the molded body has little influence on the proportion of the volume of voids having diameters in the range of 1 µm to 30 µm of the molded body. Therefore, as the activated carbon as a raw material contained in the molded body in the present embodiment, activated carbon having a high degree of activation may be used, or activated carbon having a normal degree of activation may be used.

From the viewpoint that the effect of removing PFAS can be obtained particularly stably, specifically, the proportion of the volume of voids having diameters in the range of 1 µm to 30 µm of the molded body is, for example, preferably 22.0% to 95.0%, more preferably 25.0% to 93.0%, still more preferably 30.0% to 90.0%, and particularly preferably 33.0% to 88.0%.

Specifically, the proportion of the volume of voids having diameters in the range of 1 µm to 30 µm of the molded body may be a value selected from 20.6%, 20.8%, 22.7%, 25.0%, 27.0%, 30.0%, 33.1%, 35.0%, 40.0%, 45.0%, 50.0%, 54.1%, 55.0%, 60.0%, 62.8%, 65.0%, 70.0%, 75.0%, 78.3%, 80.8%, 82.2%, 85.9%, 90.0%, and the like, or may be in a range set by setting a value selected from these as a lower limit value.

The upper limit of the proportion of the volume of voids having diameters in the range of 1 µm to 30 µm of the molded body is not particularly limited as long as a sufficient amount of activated carbon can be held in the molded body and the shape of the molded body can be maintained. For example, the proportion of the volume of voids having diameters in the range of 1 µm to 30 µm of the molded body may be a value selected from 95.0%, 93.0%, 90.0%, 85.9%, 82.2%, and the like, or may be in a range set by setting a value selected from these as an upper limit value.

The volume of voids having diameters in the range of 1 µm to 30 µm of the molded body is not particularly limited as long as the proportion of the volume of voids having diameters in the range of 1 µm to 30 µm of the molded body is 20% or more, a sufficient amount of activated carbon can be held in the molded body, and the shape of the molded body can be maintained. The volume of voids having diameters in the range of 1 µm to 30 µm of the molded body is, for example, preferably 0.10 cm³/cc to 0.90 cm³/cc, preferably 0.15 cm³/cc to 0.80 cm³/cc, more preferably 0.16 cm³/cc to 0.70 cm³/cc, and still more preferably 0.23 cm³/cc to 0.60 cm³/cc.

Specifically, the volume of voids having diameters in the range of 1 µm to 30 µm of the molded body may be a value selected from 0.15 cm³/cc, 0.16 cm³/cc, 0.20 cm³/cc, 0.23 cm³/cc, 0.30 cm³/cc, 0.38 cm³/cc, 0.40 cm³/cc, 0.49 cm³/cc, 0.51 cm³/cc, 0.54 cm³/cc, 0.55 cm³/cc, 0.58 cm³/cc, 0.60 cm³/cc, 0.70 cm³/cc, and the like, or may be in a range set by two values selected from these.

The total volume of voids of the molded body is not particularly limited as long as the proportion of the volume of voids having diameters in the range of 1 µm to 30 µm of the molded body is 20% or more, a sufficient amount of activated carbon can be held in the molded body, and the shape of the molded body can be maintained. The total volume of voids of the molded body is, for example, preferably 0.50 cm³/cc to 0.90 cm³/cc, more preferably 0.60 cm³/cc to 0.88 cm³/cc, and still more preferably 0.61 cm³/cc to 0.86 cm³/cc. When the total volume of voids of the molded body is 0.90 cm³/cc or less, the total amount of activated carbon becomes a more preferable amount. When such a molded body is used as a water purification filter or the like, the performance of removing other normal harmful substances can also be improved. When the total volume of voids of the molded body is 0.50 cm³/cc or more, the pressure loss when the molded body is used as a water purification filter or the like can be favorably kept low.

Specifically, the total volume of voids of the molded body may be a value selected from 0.60 cm³/cc, 0.61 cm³/cc, 0.62 cm³/cc, 0.67 cm³/cc, 0.71 cm³/cc, 0.72 cm³/cc, 0.73 cm³/cc, 0.86 cm³/cc, 0.88 cm³/cc, and the like, or may be in a range set by two values selected from these.

In the present specification, the volume of voids having diameters in the range of 1 µm to 30 µm of the molded body and the total volume of voids of the molded body, which are measured by the mercury intrusion porosimetry, and the proportion of the volume of voids having diameters in the range of 1 µm to 30 µm of the molded body determined from these values can be measured using a mercury intrusion porosimetry pore volume measuring apparatus ("MicroActive AutoPore V 9620" manufactured by Micromeritics Instrument Corporation), as described in Examples below. In Examples described later, a molded layer of a molded body is cut into a square with a size of about 1 cm and used as a measurement sample, but the size of the measurement sample is preferably changed as appropriate depending on the size of the molded body. For example, in the case of a molded body used for a spout-in type filter, it is desirable to perform measurement with a measurement sample of about 5 mm square.

The proportion of volume of voids having diameters in the range of 1 µm to 30 µm, the volume of voids having diameters in the range of 1 µm to 30 µm, and the total volume of voids can be controlled in their values by various methods. For example, the values can be controlled by appropriately selecting and/or adjusting the physical properties (in particular, particle size distribution) of the activated carbon as a raw material and the blending amount thereof, and when two or more types of activated carbons having different physical properties are used, the blending ratios thereof, various conditions at the time of producing the molded body (for example, the solid content concentration of the slurry to be used, the presence or absence of the rolling step of the premolded body, the treatment conditions in the suction filtration step, such as suction pressure and suction time, and the like), and the like. As will be described in detail later, among these, in particular, the proportion of the volume of voids having diameters in the range of 1 µm to 30 µm of the molded body can be easily controlled by adjusting the content (vol%) of particles having a particle size of 50 µm to 100 µm and D90 in the activated carbon as a raw material within predetermined ranges.

The density of the molded body in the present embodiment is not particularly limited as long as the proportion of the volume of voids having diameters in the range of 1 µm to 30 µm of the molded body is 20% or more, a sufficient amount of activated carbon can be held in the molded body, and the shape of the molded body can be maintained. The density of the molded body is, for example, preferably 0.15 g/cm³ to 0.60 g/cm³, more preferably 0.20 g/cm³ to 0.55 g/cm³, and still more preferably 0.22 g/cm³ to 0.51 g/cm³. In the present specification, the density of the molded body can be measured by the method described in detail in Examples below.

In the molded body in the present embodiment, the total amount of acidic functional groups of an activated carbon layer obtained by cutting out a part of the molded body (hereinafter, also simply referred to as "total amount of acidic functional groups in the activated carbon layer") is preferably 0.7 meq/g or less. When the total amount of acidic functional groups in the activated carbon layer is 0.7 meq/g or less, hydrophobicity is high, and therefore affinity between the activated carbon layer and PFAS is high. As a result, the PFAS removal performance of the molded body can be further improved. In the present specification, the total amount of acidic functional groups in the activated carbon layer can be measured by a method by neutralization titration described in detail in Examples below.

The lower limit of the total amount of acidic functional groups in the activated carbon layer is not particularly limited as long as a sufficient amount of activated carbon can be held in the molded body and the shape of the molded body can be maintained. The total amount of acidic functional groups in the activated carbon layer is, for example, preferably 0.08 meq/g to 0.65 meq/g, more preferably 0.10 meq/g to 0.60 meq/g, and still more preferably 0.15 meq/g to 0.57 meq/g.

Specifically, the total amount of acidic functional groups in the activated carbon layer may be a value selected from 0.65 meq/g, 0.60 meq/g, 0.57 meq/g, 0.55 meq/g, 0.50 meq/g, 0.45 meq/g, 0.40 meq/g, 0.38 meq/g, 0.35 meq/g, 0.32 meq/g, 0.30 meq/g, 0.24 meq/g, 0.21 meq/g, 0.20 meq/g, 0.19 meq/g, 0.17 meq/g, 0.16 meq/g, 0.15 meq/g, 0.10 meq/g, 0.08 meq/g, 0.05 meq/g, and the like, or may be in a range set by two values selected from these.

In the molded body in the present embodiment, the caramel decolorization rate of an activated carbon layer obtained by cutting out a part of the molded body (hereinafter, also simply referred to as "caramel decolorization rate of activated carbon layer") is preferably 35% or more.

A higher caramel decolorization rate of the activated carbon layer is preferable because the activated carbon in the molded body can have higher PFAS removal performance. The following reasons are conceivable as the reason. First, caramel is removed with high efficiency in activated carbon having relatively large pores. Such a pore region of the activated carbon where caramel is easily removed is similar to a pore region of the activated carbon where PFAS is likely to be introduced into the activated carbon in the process in which PFAS is adsorbed on the activated carbon. Therefore, the higher the caramel decolorization rate of the activated carbon layer, the higher the PFAS removal performance of the molded body tends to be. From such a viewpoint, the caramel decolorization rate of the activated carbon layer is preferably 35% or more, more preferably 40% or more, and particularly preferably 45% or more. The upper limit of the caramel decolorization rate of the activated carbon layer is not particularly limited, and may be 100% or less.

Specifically, the caramel decolorization rate of the activated carbon layer is, for example, preferably 35% to 100%, more preferably 40% to 99%, and still more preferably 45% to 98%.

Specifically, the caramel decolorization rate of the activated carbon layer may be a value selected from 37%, 39%, 47%, 51%, 53%, 55%, 58%, 60%, 65%, 66%, 69%, 70%, 73%, 80%, 85%, and the like, or may be in a range set by setting a value selected from these as a lower limit value. The upper limit of the caramel decolorization rate of the activated carbon layer is not particularly limited as long as a sufficient amount of activated carbon can be held in the molded body and the shape of the molded body can be maintained. For example, the caramel decolorization rate of the activated carbon layer may be a value selected from 90%, 94%, 95%, 96%, 97%, 98%, 99%, 100%, and the like, or may be in a range set by setting a value selected from these as an upper limit value.

### [Configuration of molded body]

The molded body in the present embodiment contains activated carbon and a binder.

### (Activated carbon)

In the activated carbon to be used as a raw material of the molded body in the present embodiment, it is preferable that the content of particles having a particle size of 50 µm to 100 µm (hereinafter, also simply referred to as "content of particles having a particle size of 50 µm to 100 µm") is 10 vol% or more, and D90 is 300 µm or less in a volume-based cumulative particle size distribution of the activated carbon.

In the present specification, "D90" means a 90% particle size in the volume-based cumulative particle size distribution, "D50" means a 50% particle size in the volume-based cumulative particle size distribution, and "D10" means a 10% particle size in the volume-based cumulative particle size distribution.

Specifically, by using, as the activated carbon as a raw material, activated carbon that satisfies the conditions that the content of particles having a particle size of 50 µm to 100 µm is 10 vol% or more and D90 is 300 µm or less, a molded body in which the volume of voids having diameters in the range of 1 µm to 30 µm accounts for 20% or more can be easily produced.

When the content of particles having a particle size of 50 µm to 100 µm in the activated carbon as a raw material is 10 vol% or more, the volume of voids having diameters in the range of 1 µm to 30 µm can be easily secured, and thus the volume of voids having the diameter can be increased. Further, when D90 of the activated carbon as a raw material is 300 µm or less, it is possible to avoid containing a large amount of activated carbon having an excessively large particle size, and to easily secure the volume of voids having diameters in the range of 1 µm to 30 µm.

From the viewpoint that the volume of voids having diameters in the range of 1 µm to 30 µm can be particularly stably increased, the content of particles having a particle size of 50 µm to 100 µm is, for example, preferably 15.0 vol% to 50.0 vol%, more preferably 17.0 vol% to 50.0 vol%, and still more preferably 17.4 vol% to 39.1 vol%.

Specifically, in the activated carbon as a raw material, the content of particles having a particle size of 50 µm to 100 µm may be a value selected from 11.0 vol%, 12.0 vol%, 13.0 vol%, 14.0 vol%, 15.0 vol%, 16.0 vol%, 17.0 vol%, 17.4 vol%, 18.0 vol%, 19.0 vol%, 20.0 vol%, 20.1 vol%, 20.8 vol%, 22.0 vol%, 24.0 vol%, 25.1 vol% and the like, or may be in a range set by setting a value selected from these as a lower limit value.

The upper limit of the content of particles having a particle size of 50 µm to 100 µm is not particularly limited as long as a molded body in which the proportion of volume of voids having diameters in the range of 1 µm to 30 µm is 20% or more can be finally produced, a sufficient amount of activated carbon can be held in the produced molded body, and the shape of the molded body can be maintained. For example, the content of particles having a particle size of 50 µm to 100 µm may be a value selected from 80.0 vol%, 60.0 vol%, 55.0 vol%, 50.0 vol%, 45.0 vol%, 40.0 vol%, 39.1 vol%, and the like, or may be in a range set by setting a value selected from these as an upper limit value.

From the viewpoint that the volume of voids having diameters in the range of 1 µm to 30 µm can be particularly stably increased, in the activated carbon as a raw material, D90 is, for example, preferably 80 µm to 260 µm, more preferably 90 µm to 240 µm, and still more preferably 97 µm to 228 µm.

Specifically, in the activated carbon as a raw material, D90 may be a value selected from 290 µm, 280 µm, 270 µm, 260 µm, 250 µm, 240 µm, 230 µm, 228 µm, 223 µm, 220 µm, and the like, or may be in a range set by setting a value selected from these as an upper limit value.

The lower limit of D90 is not particularly limited as long as a molded body in which the proportion of the volume of voids having diameters in the range of 1 µm to 30 µm is 20% or more can be finally produced, a sufficient amount of activated carbon can be held in the produced molded body, and the shape of the molded body can be maintained. For example, D90 may be a value selected from 20 µm, 30 µm, 40 µm, 50 µm, 70 µm, 80 µm, 86 µm, 90 µm, 97 µm, and the like, or may be in a range set by setting a value selected from these as a lower limit value.

In the activated carbon as a raw material, D50 and D10 are not particularly limited as long as a molded body in which the proportion of the volume of voids having diameters in the range of 1 µm to 30 µm is 20% or more can be finally produced, a sufficient amount of activated carbon can be held in the produced molded body, and the shape of the molded body can be maintained. Alternatively, D50 and D10 are preferably adjusted so that the content of particles having a particle size of 50 µm to 100 µm in the activated carbon as a raw material is 10 vol% or more and D90 is 300 µm or less.

From the viewpoint that the volume of voids having diameters in the range of 1 µm to 30 µm can be particularly stably increased, D50 is, for example, preferably 25 µm to 180 µm, more preferably 30 µm to 160 µm, and still more preferably 38 µm to 149 µm. Specifically, D50 may be a value selected from 20 µm, 30 µm, 38 µm, 45 µm, 60 µm, 75 µm, 90 µm, 110 µm, 130 µm, 149 µm, 160 µm, 180 µm, 200 µm, and the like, or may be in a range set by two values selected from these.

From the viewpoint that the volume of voids having diameters in the range of 1 µm to 30 µm can be particularly stably increased, D10 is, for example, preferably 10 µm to 120 µm, more preferably 13 µm to 100 µm, and still more preferably 16 µm to 81 µm. For example, D10 may be a value selected from 10 µm, 12 µm, 16 µm, 18 µm, 25 µm, 35 µm, 60 µm, 70 µm, 81 µm, 90 µm, 100 µm, 120 µm, 140 µm, and the like, or may be in a range set by two values selected from these.

The type of such an activated carbon as a raw material having a content of particles having a particle size of 50 µm to 100 µm and D90 (further D50 and D10) is not particularly limited, and the activated carbon can be used alone or in combination of two or more types of activated carbons having different physical properties.

The content of particles having a particle size of 50 µm to 100 µm and D90 (and also D50 and D10) in the activated carbon as a raw material described above can be controlled, for example, by appropriately selecting and appropriately adjusting the type of the carbonaceous material to be a raw material of the activated carbon described later, the activation treatment method of the carbonaceous material and the treatment conditions (heating temperature, time, and the like) for the carbonaceous material, the pulverization conditions, and the classification conditions in the production of the activated carbon. Further, in the present specification, the content of particles having a particle size of 50 µm to 100 µm and D90 (and also D50 and D 10) in the activated carbon as a raw material can be analyzed and measured by, for example, a laser diffraction scattering method using a wet particle size distribution measuring apparatus ("Microtrac MT3300EX-II" manufactured by MicrotracBEL Corp.) or the like as described in the following Examples.

In the activated carbon used as a raw material of the molded body in the present embodiment, the proportion of the pore volume of mesopores of the activated carbon calculated from a nitrogen adsorption isotherm by a BJH method in the total pore volume of the pore volume of mesopores of the activated carbon calculated from the nitrogen adsorption isotherm by the BJH method and the pore volume of micropores of the activated carbon calculated from the nitrogen adsorption isotherm by an MP method (hereinafter, also simply referred to as "proportion of pore volume of mesopores of activated carbon as a raw material") is preferably 5% to 30%. When the proportion of the pore volume of mesopores is more than 5%, PFAS can be easily introduced into the activated carbon. Moreover, there is a case where the PFAS removal performance of the molded body can be improved in a situation where a certain water flow rate is required for the molded body, such as, when the molded body is used as a water purification filter. On the other hand, when the proportion of the pore volume of mesopores is less than 30%, the power for retaining adsorption of PFAS having been introduced into the activated carbon can be maintained, and thus the PFAS removal performance of the molded body may be improved.

The pores of the activated carbon can be classified into micropores (diameter: less than 2 nm), mesopores (diameter: 2 nm to 50 nm), and macropores (diameter: more than 50 nm) according to their diameters (the parentheses indicate the IUPAC classification criteria). The mesopores are larger than the micropores, and the volume of the mesopores can be mainly an index of adsorption characteristics of a substance having a large molecular size. That is, the volume of mesopores can be an index indicating the PFAS removal performance of the activated carbon as a raw material itself. Further, the proportion of the pore volume of mesopores of the activated carbon is related to the degree of progress of activation of the activated carbon as a raw material.

The molded body in the present embodiment can satisfactorily remove PFAS regardless of the degree of progress of activation of the activated carbon as long as the molded body satisfies the conditions regarding the proportion of the volume of voids having diameters in the range of 1 µm to 30 µm. However, when the proportion of the pore volume of mesopores is 5% to 30%, it is possible to more reliably obtain a molded body capable of satisfactorily removing PFAS. The proportion of the pore volume of mesopores of the activated carbon as a raw material is, for example, preferably 5.5% to 30.0%, more preferably 6.0% to 27.0%, and still more preferably 6.5% to 25.0%.

Specifically, the proportion of the pore volume of mesopores of the activated carbon as a raw material may be a value selected from 5.5%, 6.0%, 6.7%, 7.1%, 8.0%, 9.0%, 9.9%, 10.0%, 11.0%, 11.6%, 15.0%, 20.0%, 20.8%, 23.0%, and the like, or may be in a range set by two values selected from these.

Among the pores of the activated carbon, the pore volume (ml/g) of mesopores having a pore diameter in the range of 2 nm to 50 nm can be calculated from a nitrogen adsorption isotherm of the activated carbon by applying the Barrett-Joyner-Halenda (BJH) method used for analysis of mesopores (pores having a pore diameter of 2 nm to 50 nm) of a porous material. In addition, in the present specification, the proportion of the pore volume of mesopores of the activated carbon as a raw material can be calculated by dividing the pore volume (ml/g) of mesopores calculated by the BJH method by the sum of the pore volume of mesopores calculated by the BJH method and the pore volume of micropores calculated by the MP method, as described in detail in Examples below.

Further, in the activated carbon used as a raw material of the molded body in the present embodiment, the benzene saturated adsorption amount is preferably 25% to 60%.

The benzene saturated adsorption amount is an index indicating the degree of progress of activation of the activated carbon as a raw material. The molded body in the present embodiment can satisfactorily remove PFAS regardless of the degree of progress of activation of the activated carbon as long as the molded body satisfies the conditions regarding the proportion of the volume of voids having diameters in the range of 1 µm to 30 µm. However, when the benzene saturated adsorption amount is 25% to 60%, it is possible to more reliably obtain a molded body capable of satisfactorily removing PFAS. The benzene saturated adsorption amount of the activated carbon as a raw material is more preferably 27% to 55%, and still more preferably 29% to 51%.

Specifically, the benzene saturated adsorption amount of the activated carbon as a raw material may be a value selected from 25%, 26%, 27%, 28%, 29%, 30%, 32%, 35%, 37%, 40%, 42%, 45%, 47%, 50%, 51%, 52%, 53%, 54%, 55%, 56%, 58%, 59%, and the like, or may be in a range set by two values selected from these.

In the present specification, the benzene saturated adsorption amount of the activated carbon as a raw material can be measured by a method specified in JIS K 1474:2014 described in detail in Examples below.

The proportion of the pore volume of mesopores and the benzene saturated adsorption amount of the activated carbon as a raw material described above can also be controlled by, for example, appropriately selecting and appropriately adjusting the type of the carbonaceous material to be a raw material of the activated carbon described later, and the activation treatment method and treatment conditions (heating temperature, time, and the like) for the carbonaceous material in the production of the activated carbon.

As the activated carbon as a raw material, a commercially available product may be used. Alternatively, an activated carbon obtained by subjecting a carbonaceous material to be a raw material of the activated carbon to a carbonization treatment as necessary, and then subjecting the carbonaceous material to an activation treatment, and a washing treatment, a drying treatment, and a pulverization treatment as necessary can also be used, for example.

The carbonaceous material to be a raw material is not particularly limited, and examples thereof include plant-based carbonaceous materials (for example, materials derived from plants such as wood, sawdust, charcoal, fruit shells such as coconut shell and walnut shell, fruit seeds, rice husks, by-products in pulp production, lignin, and waste molasses), mineral-based carbonaceous materials (for example, materials derived from minerals such as peat, lignite, brown coal, bituminous coal, anthracite, coke, coal tar, coal pitch, petroleum distillation residues, and petroleum pitch), synthetic resin-based carbonaceous materials (for example, materials derived from synthetic resins such as phenol resin, polyvinylidene chloride, and acrylic resin), and natural fiber-based carbonaceous materials (for example, materials derived from natural fibers such as cellulose and regenerated fibers such as rayon). These carbonaceous materials may be used alone, or two or more types thereof may be used in combination.

When a carbonization treatment is required, the carbonaceous material can be usually subjected to a carbonization treatment at, for example, about 400°C to 800°C in an environment in which oxygen or air is blocked. Thereafter, the particle size of the carbonaceous material may be adjusted as necessary. When the carbonaceous material is bituminous coal or the like, it is preferable to perform a dry distillation treatment before the activation treatment. As the dry distillation treatment, conventional means can be used. For example, the dry distillation treatment can be performed at a temperature of about 400 to 800°C while oxygen or air is blocked.

Thereafter, the carbonaceous material is subjected to an activation treatment. The activation treatment can be performed by a general method in the technical field, and is not particularly limited. Examples of the activation treatment mainly include two types of treatment methods of a gas activation treatment and a chemical activation treatment. Among them, when the carbonaceous material is used for water purification applications, a gas activation treatment is preferable from the viewpoint of less residual impurities.

The gas activation treatment is a treatment of heating a carbonaceous material in the presence of, for example, water vapor, carbon dioxide, air, oxygen, combustion gas, or a mixed gas thereof. The heating temperature is not particularly limited, but for example, the heating is performed at a temperature of about 700°C to 1100°C. The activation time and the temperature elevation rate are not particularly limited, and may be appropriately adjusted according to the type, shape, and size of the carbonaceous material to be selected. In consideration of safety and reactivity, it is preferable to use a gas containing water vapor in an amount of 10 vol% to 40 vol%. As the chemical activation treatment, for example, a known method of mixing an activator such as zinc chloride, calcium chloride, phosphoric acid, sulfuric acid, sodium hydroxide, potassium hydroxide, magnesium hydroxide, or calcium hydroxide with a carbonaceous material and heating the mixture under an inert gas atmosphere may be performed.

The activated carbon after the activation treatment is washed and dried as necessary. Specifically, when a plant-based carbonaceous material such as coconut shell or a mineral-based carbonaceous material, both of which contain impurities (alkali metal, alkaline earth metal, transition metal, and the like), is used as a raw material of the activated carbon, washing is performed as necessary in order to remove ash, chemicals, and the like. A mineral acid or water is used for washing, and hydrochloric acid having high washing efficiency is preferable as the mineral acid.

The activated carbon after the activation treatment is subjected to a pulverization treatment and/or classification treatment as necessary. The pulverization treatment can be performed by a pulverizer generally used for pulverizing activated carbon, for example, a highspeed rotating mill such as an aerofall mill, a rod mill, a roller mill, a hammer mill, a blade mill, and a pin mill, a ball mill, or a jet mill. Examples of the classification treatment include methods generally used for classification of activated carbon, for example, classification using a sieve, wet classification, and dry classification. Examples of the wet classifier include classifiers using principles such as gravity classification, inertial classification, hydraulic classification, and centrifugal classification. Examples of the dry classifier include classifiers using principles such as sedimentation classification, mechanical classification, and centrifugal classification.

The shape of the activated carbon obtained through such treatments or the commercially available activated carbon may be any shape such as a powder shape, a particle shape, and a fiber shape (thread-like, woven cloth-like, felt-like), and can be appropriately selected according to the application thereof. Among these shapes, a powder shape having high adsorption performance per volume is preferable.

### (Binder)

The binder used for the molded body in the present embodiment is not particularly limited, and powdered or fibrous binders can be used alone or in combination of two or more types. Among them, the binder preferably contains a fibrous binder from the viewpoint of excellent water permeability when the produced molded body is used as, for example, a water purification filter.

The fibrous binder is not particularly limited as long as it can be shaped by entangling activated carbon, and can be widely used regardless of synthetic products and natural products. Examples of such a binder include acrylic fibers, polyethylene fibers, polypropylene fibers, polyacrylonitrile fibers, cellulose fibers, nylon fibers, aramid fibers, and pulp.

The fibrous binder preferably contains an acrylic fibrous binder. Further, the fibrous binder more preferably contains a cellulose fibrous binder. Two or more types of these fibrous binders may be used in combination. For example, it is more preferable to use both the acrylic fibrous binder and the cellulose fibrous binder in combination.

In the present embodiment, the water permeability of the fibrous binder is preferably about 1 mL to 200 mL, and more preferably about 10 mL to 150 mL in terms of CSF value. Here, in the present specification, the CSF value is a value measured with reference to "Pulps-Determination of drainability" "Canadian standard" freeness method, specified in JIS P 8121:2012. When two or more types of fibrous binders are used in combination, the CSF value in a state where two or more types of fibrous binders are mixed preferably satisfies the above range.

The blending ratio between the activated carbon and the binder is not particularly limited, and may be appropriately set so as to finally obtain a molded body in which the proportion of the volume of voids having diameters in the range of 1 µm to 30 µm is 20% or more. For example, the content of the binder is preferably about 3 parts by mass to 10 parts by mass based on 100 parts by mass of the activated carbon.

### (Optional components)

The molded body in the present embodiment may contain other optional functional components as long as the PFAS removing effect is not impaired. Examples thereof include a zeolite-based powder (lead adsorbent) capable of adsorbing and removing soluble lead, an ion exchange resin, and a chelating resin. The blending amounts of these other optional components are not particularly limited as long as a molded body in which the proportion of the volume of voids having diameters in the range of 1 µm to 30 µm is 20% or more can be finally produced, but for example, the optional components can be blended in an amount of 1 part by mass to 30 parts by mass based on 100 parts by mass of the entire molded body.

The molded body containing activated carbon and a binder in the present embodiment further includes a core, and may be a cylindrical molded body. A molded body having a cylindrical shape can reduce the pressure loss, and thus can be suitably used as a water purification filter or the like. Further, when the molded body as a water purification filter is filled in a housing and used as a cartridge as described later, there is an advantage that loading and replacement operations of the cartridge into the water purifier can be simplified.

The core is not particularly limited as long as it can be inserted into the hollow portion of the cylindrical molded body to reinforce the cylindrical molded body. Examples thereof include a Trical pipe, a Netron pipe, and a ceramic filter. Further, a nonwoven fabric or the like can be wrapped around the outer periphery of the core for use.

### [Method for producing molded body]

The method for producing the molded body in the present embodiment may be performed by any method known to those skilled in the art, and is not particularly limited. From the viewpoint of efficient production, a slurry suction method is preferable.

Hereinafter, as an example of the method for producing the molded body in the present embodiment, a method for producing a cylindrical molded body will be described in detail, but the method is not limited to the production method.

Specifically, for example, the cylindrical molded body in the present embodiment can be produced by a method including a slurry preparation step, a suction filtration step, an optional rolling step, a drying step, and an optional grinding step. In the slurry preparation step, powdered activated carbon and a fibrous binder are dispersed in water to prepare a slurry. In the suction filtration step, the prepared slurry is filtered while being sucked to obtain a premolded body. In the rolling step, the shape of the outer surface of the premolded body is adjusted as necessary by compressing, on a shaping table, the premolded body after suction filtration. In the drying step, the shaped premolded body is dried to obtain a dried molded body. In the grinding step, the outer surface of the dried molded body is ground as necessary. Hereinafter, each step will be specifically described.

### (Slurry preparation step)

In the slurry preparation step, a slurry is prepared in which powdered activated carbon and a fibrous binder are dispersed in a solvent such that, for example, the solid content concentration is 0.1 mass% to 10 mass%. The solvent is not particularly limited, but water or the like is preferably used. One of the factors for controlling the volume of voids having a predetermined diameter in the finally obtained molded body within a desired range includes appropriately adjusting the solid content concentration of the slurry in the slurry preparation step.

### (Suction filtration step)

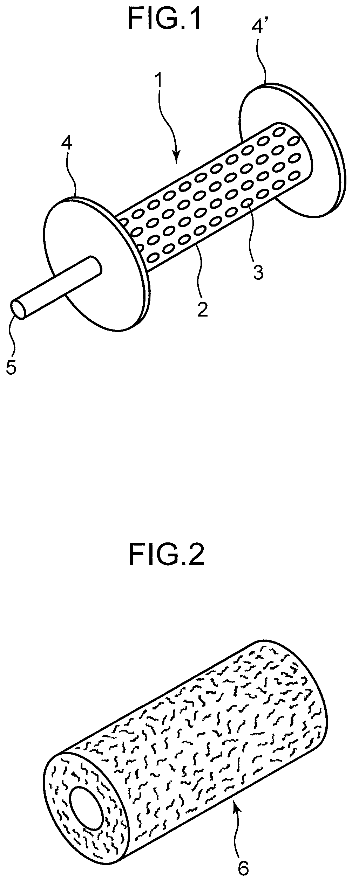

The suction filtration step will be described with reference to FIG. 1. In FIG. 1, reference numerals denote a mold 1, a core body 2, a suction hole 3, flanges 4 and 4', and a filtrate discharge port 5. In the suction filtration step, for example, the mold 1 for a cylindrical molded body as shown in FIG. 1 is used. The mold 1 includes: the core body 2 having a large number of the suction holes 3 on the surface thereof; the flanges 4 and 4' attached to both ends of the mold 1; and the filtrate discharge port 5. First, the core as described above is attached to the mold 1, and the mold 1 is placed in the prepared slurry. The slurry is allowed to adhere to the mold 1 by performing filtering while sucking the slurry from the inside of the mold 1 through the filtrate discharge port 5. As the suction method, a conventional method, for example, a method of performing suction by a suction pump or the like can be used. The premolded body is thus attached to the mold 1. A desired void structure can also be obtained by controlling the suction force in the suction filtration step.

### (Rolling step)

After the suction filtration step, a rolling step can also be performed as necessary in order to adjust the size of the outer diameter of the premolded body. In the rolling step, the mold 1, to which the premolded body obtained in the suction filtration step is attached, may be placed on a table and moved back and forth while being pressed with a predetermined force. Such an optional rolling step may also lead to a decrease in the volume of voids having a relatively large diameter in the molded body.

The suction filtration step and the rolling step performed as necessary may be performed any number of times.

### (Drying step)

Next, the flanges 4 and 4' at both ends of the mold 1 are removed, and the core body 2 is removed. A hollow cylindrical premolded body can be thus obtained. In the drying step, the premolded body released from the mold 1 is dried with a dryer or the like. Thus, a molded body 6 shown in FIG. 2 can be obtained. The drying temperature is, for example, about 100°C to 150°C. The drying time is, for example, about 4 to 24 hours.

### (Grinding step)

After the drying step, the grinding step can also be performed as necessary in order to further adjust the outer diameter of the molded body or in order to reduce the unevenness of the outer peripheral surface of the molded body. The grinding method is not particularly limited as long as the outer surface of the dried molded body can be ground (or polished), and any grinding method known to those skilled in the art may be used. From the viewpoint of the uniformity of grinding, a method using a grinder that grinds the molded body through rotation of the molded body itself is preferable.

### [Application of molded body, and the like]

The molded body in the present embodiment can be suitably used as a molded body for removing PFAS. For example, the molded body in the present embodiment can be suitably used as a water purification filter for removing PFAS. When the molded body is used as a water purification filter, for example, the molded body can be used by being cut into a size and shape suitable as a water purification filter after the molded body is produced by the above-described method. Further, as necessary, a cap may be attached to a tip portion of the molded body as a water purification filter. In addition, the molded body as a water purification filter can be used by being further combined with a known nonwoven fabric filter, various types of adsorbents, mineral additive materials, ceramic filtering materials, and the like.

When the molded body in the present embodiment is used as a water purification filter, the molded body can also be used as a water purification cartridge by being filled in a housing. The water purification cartridge is loaded into the water purifier, and water passes through the water purification cartridge.

### <Method for removing perfluoroalkyl compound and/or polyfluoroalkyl compound>

The method for removing a perfluoroalkyl compound and/or a polyfluoroalkyl compound in the present embodiment includes using the molded body in the above-described embodiment. For example, the molded body in the above-described embodiment may be used by being cut into a desired size and shape, or by using the molded body as a cylindrical water purification filter as described above, PFAS can be suitably removed.

The outline of the present invention has been described above, and the molded body and the method for removing a perfluoroalkyl compound and/or a polyfluoroalkyl compound in the present embodiment are summarized as follows.

A molded body according to a first aspect of the present invention is a molded body containing activated carbon and a binder, wherein a volume of voids having diameters in the range of 1 µm to 30 µm in the molded body measured by mercury intrusion porosimetry is 20% or more of a volume of all voids in the molded body measured by mercury intrusion porosimetry.

A molded body according to a second aspect of the present invention is the molded body according to the first aspect, wherein in a volume-based cumulative particle size distribution of the activated carbon, a content of particles having a particle size of 50 µm to 100 µm is 10 vol% or more, and D90 is 300 µm or less.

A molded body according to a third aspect of the present invention is the molded body according to the first or second aspect, wherein a total amount of acidic functional groups in an activated carbon layer obtained by cutting out a part of the molded body is 0.7 meq/g or less.

A molded body according to a fourth aspect of the present invention is the molded body according to any one of the first to third aspects, wherein a caramel decolorization rate of an activated carbon layer obtained by cutting out a part of the molded body is 35% or more.

A molded body according to a fifth aspect of the present invention is the molded body according to any one of the first to fourth aspects, wherein a benzene saturated adsorption amount of the activated carbon is 25% to 60%.

A molded body according to a sixth aspect of the present invention is the molded body according to any one of the first to fifth aspects, wherein a proportion of a pore volume of mesopores of the activated carbon calculated from a nitrogen adsorption isotherm by a BJH method in a total pore volume of the pore volume of mesopores of the activated carbon calculated from the nitrogen adsorption isotherm by the BJH method and a pore volume of micropores of the activated carbon calculated from the nitrogen adsorption isotherm by an MP method is 5% to 30%.

A molded body according to a seventh aspect of the present invention is the molded body according to any one of the first to sixth aspects, wherein the molded body is for removing a perfluoroalkyl compound and/or a polyfluoroalkyl compound.

A method for removing a perfluoroalkyl compound and/or a polyfluoroalkyl compound according to an eighth aspect of the present invention includes using the molded body according to any one of the first to seventh aspects.

### Examples

Hereinafter, the present invention will be described more specifically with reference to Examples, but the present invention is not limited by Examples at all.

First, details of raw materials used for producing a molded body in each of Examples and Comparative Examples, a method for measuring physical properties of activated carbon (powdered activated carbon) as a raw material, and a method for measuring physical properties and performance of the produced molded body will be described.

### [Raw materials of molded body]

### (Activated carbon as raw material)

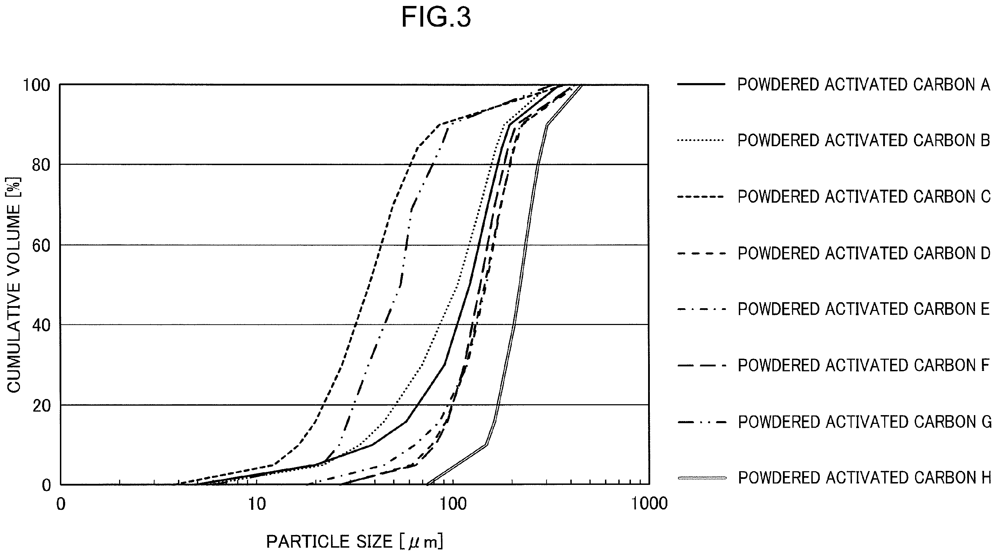

Hereinafter, a method for producing activated carbon (powdered activated carbon) used as a raw material will be described, but the production method is not particularly limited as long as necessary physical properties are satisfied. Further, FIG. 3 shows a graph of the particle size distributions (cumulative volume (%)) of activated carbons (powdered activated carbons) described below.

### · Powdered activated carbon A

Coconut shell carbon obtained by carbonizing coconut shells made in the Philippines was activated by water vapor at 900°C. The obtained coconut shell activated carbon was washed with dilute hydrochloric acid and desalted with ion-exchanged water to obtain granular activated carbon. The obtained granular activated carbon was pulverized with a roll mill to obtain powdered activated carbon A exhibiting the particle size distribution as shown in FIG. 3 and having D10 of 39 µm, D50 of 123 µm, and D90 of 197 µm.

### · Powdered activated carbon B

Granular activated carbon was obtained in the same manner as in the powdered activated carbon A. The obtained granular activated carbon was pulverized in a ball mill to obtain powdered activated carbon B exhibiting the particle size distribution as shown in FIG. 3 and having D10 of 34 µm, D50 of 106 µm, and D90 of 184 µm.

### · Powdered activated carbon C

Granular activated carbon was obtained in the same manner as in the powdered activated carbon A. The obtained granular activated carbon was pulverized in a ball mill to obtain powdered activated carbon C exhibiting the particle size distribution as shown in FIG. 3 and having D10 of 16 µm, D50 of 38 µm, and D90 of 86 µm.

### · Powdered activated carbon D

Granular activated carbon was obtained in the same manner as in the powdered activated carbon A. The obtained granular activated carbon was pulverized with a roll mill and then subjected to dry classification. Powdered activated carbon D exhibiting the particle size distribution as shown in FIG. 3 and having D10 of 78 µm, D50 of 146 µm, and D90 of 228 µm was finally obtained.

### · Powdered activated carbon E

Bituminous coal was subjected to a dry distillation treatment at 700°C, and then the dry distillate was activated at 750°C using a mixed gas containing water vapor, carbon dioxide, and nitrogen. The obtained granular activated carbon was pulverized with a roll mill and then subjected to dry classification. Powdered activated carbon E exhibiting the particle size distribution as shown in FIG. 3 and having D10 of 64 µm, D50 of 149 µm, and D90 of 223 µm was finally obtained.

### · Powdered activated carbon F

Granular activated carbon was obtained in the same manner as in the powdered activated carbon A. The obtained granular activated carbon was pulverized with a roll mill and then subjected to dry classification. Powdered activated carbon F exhibiting the particle size distribution as shown in FIG. 3 and having D10 of 81 µm, D50 of 139 µm, and D90 of 212 µm was finally obtained.

### · Powdered activated carbon G

A wood-based raw material was impregnated with phosphoric acid, then activated at 500°C, washed with water, and then dried to obtain wood-based activated carbon. The obtained wood-based activated carbon was subjected to dry classification. Further, the classified wood-based activated carbon and the powdered activated carbon B were mixed at a weight ratio of (wood-based activated carbon) : (powdered activated carbon B) = 85 : 15 to finally obtain powdered activated carbon G exhibiting the particle size distribution as shown in FIG. 3 and having D10 of 26 µm, D50 of 54 µm, and D90 of 97 µm.

### · Powdered activated carbon H

Granular activated carbon was obtained in the same manner as in the powdered activated carbon A. The obtained granular activated carbon was pulverized with a roll mill having a wide interval between rolls, and then subjected to dry classification. Powdered activated carbon H exhibiting the particle size distribution as shown in FIG. 3 and having D10 of 148 µm, D50 of 222 µm, and D90 of 305 µm was finally obtained.

The physical properties of the activated carbons as raw materials of the powdered activated carbon A to the powdered activated carbon H described above are listed in Table 2 below together with the measurement results of physical properties and performance of the molded bodies of Examples and Comparative Examples produced using these powdered activated carbons. Table 2 also shows, as the physical properties of the raw material activated carbon, the content of particles having a particle size of 50 µm to 100 µm in the activated carbon as a raw material measured by the method described later.

### (Binder)

· Acrylic fibrous binder: "Acrylic fiber Bi-PUL/F" manufactured by Japan Exlan Co., Ltd., CSF value: 83 mL
· Cellulose fibrous binder: "CELISH PC110S" manufactured by Daicel Miraizu Ltd. (CSF value: 28 mL, the CSF value is a value in a state in which 50 parts by mass of the cellulose fibrous binder is blended with 100 parts by mass of the acrylic fibrous binder described above (CSF value: 83 mL))

### (Others)

· Titanosilicate-based lead adsorbent: "ATS" manufactured by Solenis, average particle size: 20 µm
·Core: "MF filter (30 µm)" manufactured by Asahi Fiber Industry Co., Ltd.
· Nonwoven fabric: "9540-F" manufactured by Shinwa Co., Ltd.

### [Measurement of particle size distribution of activated carbon as raw material]

The D10 (µm), D50 (µm) and D90 (µm), and the content (vol%) of particles having a particle size of 50 µm to 100 µm of the activated carbon as a raw material were measured by a laser diffraction scattering method. That is, activated carbon to be measured was placed in ion-exchanged water together with a surfactant, and subjected to ultrasonic vibration to prepare a uniform dispersion. Measurement was performed by a wet particle size distribution measuring apparatus ("Microtrac MT3300EX-II" manufactured by MicrotracBEL Corp.). As the surfactant, "polyoxyethylene (10) octylphenyl ether" manufactured by FUJIFILM Wako Pure Chemical Corporation was used. The analysis conditions are shown below.

### (Analysis conditions)

Number of measurements; average value of three times
Measurement time; 30 seconds
Distribution representation; volume
Particle size division; standard
Calculation mode; MT3000II
Solvent name; water
Upper limit of measurement; 2000 µm, lower limit of measurement; 0.021 µm
Residual fraction ratio; 0.00
Passing fraction ratio; 0.00
Residual fraction ratio setting; invalid
Particle transmittance; absorption
Particle refractive index; N/A
Particle shape; N/A
Solvent refractive index; 1.333
DV value; 0.0882
Transmission (TR); 0.880 to 0.900
Extension filter; invalid
Flow rate; 70%
Ultrasonic output; 40 W
Ultrasonic time; 180 seconds

### [Measurement of benzene saturated adsorption amount (%) of activated carbon as raw material]

The benzene saturated adsorption amount (%) of the activated carbon as a raw material was determined, in accordance with a test method specified in JIS K 1474:2014, from an increase (%) in the amount of a sample when air containing solvent vapor having a solvent saturation concentration of 1/10 was passed through the sample at 25°C and the mass of the sample became constant.

### [Measurement of proportion of pore volume of mesopores (diameter: 2 nm to 50 nm) of activated carbon as raw material]

Using a gas adsorption measuring apparatus (BELSORP-MAX II manufactured by MicrotracBEL Corp.), activated carbon as a raw material to be measured was heated at 300°C for 3 hours under a nitrogen stream (nitrogen flow rate: 50 mL/min). Then, a nitrogen adsorption isotherm of the activated carbon at 77 K was measured. In the obtained nitrogen adsorption isotherm, the BJH method was applied, and the pore volume (ml/g) of mesopores having a pore diameter of 2 nm to 50 nm among the pores of the activated carbon to be measured was calculated in the relative pressure P/P0 ranging from 0.10 to 0.99. In the analysis of the BJH method, the molecular weight of the adsorbate was set to 28.013, the density of the adsorbate was set to 0.808 g/cm³, and the interpolation method for the file data was set to linear interpolation. The pore volume (ml/g) of micropores having a pore diameter of less than 2 nm was calculated by the MP method. For the analysis of the MP method, a reference curve "NGCB-BEL.t" provided by MicrotracBEL Corp. was used. Finally, the proportion (%) of the pore volume of mesopores (with respect to the total pore volume of the pore volume of mesopores and the pore volume of micropores) was calculated by dividing the pore volume of mesopores calculated by the BJH method by the sum of the pore volume of mesopores calculated by the BJH method and the pore volume of micropores calculated by the MP method.

### [Measurement of density of molded body]

The density (g/cm³) of the molded body was calculated according to the following formula after the obtained molded body was dried at 120°C for 2 hours. The density refers only to the molded layer of activated carbon. 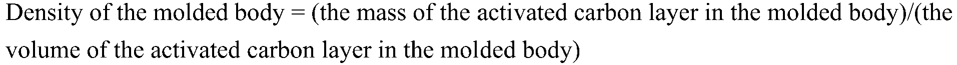 Density of the molded body = (the mass of the activated carbon layer in the molded body)/(the volume of the activated carbon layer in the molded body)

### [Measurement of volume of voids of molded body by mercury porosimeter]

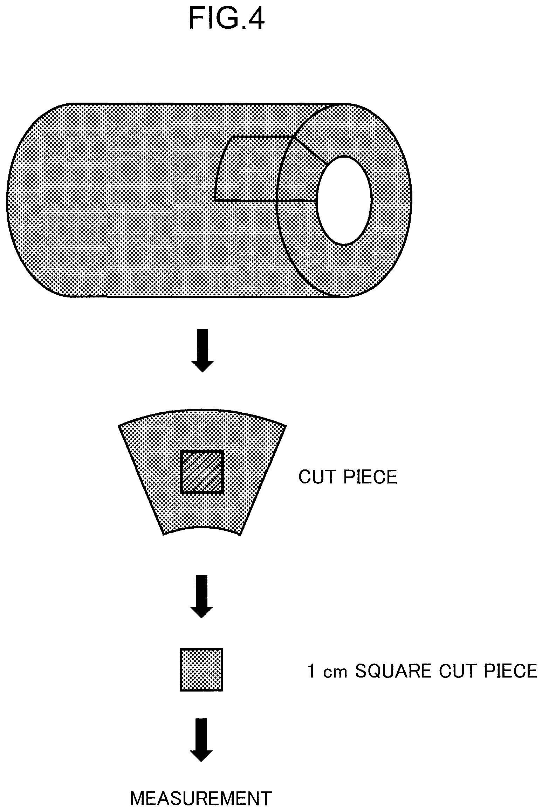

The volume of voids of the molded body was measured by a mercury intrusion porosimetry pore volume measuring apparatus ("MicroActive AutoPore V 9620" manufactured by Micromeritics Instrument Corporation). The measurement pressure was 0.7 kPa to 420 MPa. The molded layer formed of activated carbon and a binder of the cylindrical molded body was cut as shown in FIG. 4, and then the cut piece was further cut into a square with a size of about 1 cm. The volume of voids having diameters in the range of 1 µm to 30 µm (cm³/g) and the total volume of voids (cm³/g) of the cut sample of about 1 cm square on a weight basis of the molded body were calculated. Then, these values were multiplied by the density of the molded body obtained by the above-described method to calculate the volume of voids having diameters in the range of 1 µm to 30 µm (cm³/cc) and the total volume of voids (cm³/cc) on a volume basis of the molded body. From these values, the proportion (%) of the volume of voids having diameters in the range of 1 µm to 30 µm of the molded body (with respect to the total volume of voids) was calculated.

### [Measurement of total amount of acidic functional groups (meq/g)]

The total amount of acidic functional groups (meq/g) in the activated carbon layer of the molded body was measured by the following method. First, a part of the activated carbon layer of the molded body was cut out with a cutter knife, and the cut sample piece was finely pulverized until the average particle size of the particles of the cut sample piece became 2 mm or less. Next, the pulverized sample was dried at 115°C for 3 hours, then allowed to cool to room temperature in a desiccator, and 1.0 g of the sample after being allowed to cool was weighed, and used as a measurement sample. Further, 1.0 g of the measurement sample was added to 50 mL of a 0.1 mol/L aqueous sodium hydroxide solution, and the solution was shaken for 30 minutes and then allowed to stand at 25°C for 24 hours. Thereafter, the solution was centrifuged, and 10 mL of a supernatant of the solution was collected. Then, 10 mL of the collected supernatant was subjected to neutralization titration with a 0.1 mol/L hydrochloric acid solution to thereby determine the total amount of acidic functional groups (meq/g) of the molded body.

### [Measurement of caramel decoloring performance]

The caramel decoloring performance of the activated carbon layer of the molded body was measured with reference to a method specified in JIS K 1474:2014. Specifically, the absorbance of the filtrate of each of a caramel test solution and a caramel test solution after adsorption by a powdered sample of the activated carbon layer of the molded body was measured, whereby the caramel decolorization rate (%) of the activated carbon layer of the molded body at 25°C was determined. The powdered sample of the activated carbon layer was prepared by cutting out a part of the activated carbon layer of the molded body with a cutter knife, and pulverizing the cut sample piece using a sample mill.

### [Measurement of PFAS removal performance]

The PFAS removal performance of the molded body was measured by the following method in accordance with JWPAS B.210 "Standard Criteria for Testing Method of Removal Performance of Water Purifier" (Japan Water Purifier Association). First, diluted water having PFOS and PFOA concentrations of 25 ppt±5 ppt was prepared. The temperature of the diluted water was adjusted to 20±3°C to prepare test water. The test water was allowed to pass through the cylindrical molded body from the outside to the inside thereof at a flow rate such that the space velocity (SV) is 1200/hr, with respect to the volume of the activated carbon, and the test water and the treated water were simultaneously collected over time to obtain samples. The PFOS and PFOA concentrations in each of these samples were measured by liquid chromatography-mass spectrometry, and the removal rates (%) were calculated. Further, the cumulative water-passing amount per volume of the molded body at the time when the removal rates of PFOS and PFOA became less than 80% was calculated as the PFOS and PFOA removal rate life (L/cc). In this test, the case where the PFOS and PFOA removal rate life (L/cc) was 15 L/cc or more was defined as an acceptance criterion, and the molded body was evaluated to be capable of satisfactorily removing PFOS and PFOA over a long period of time.

Next, a method for producing a molded body in each of Examples and Comparative Examples will be described in detail.

### <Example 1>

The powdered activated carbon A and an acrylic fibrous binder were prepared so that the total amount thereof was 1.2 kg at the blending ratio shown in Table 1 below, and tap water was added. The amount of slurry after addition was 20 L.

Next, a core (outer diameter: 35 mmφ, inner diameter: 30.5 mmφ, height: 245 mmH) was attached to a cylindrical mold for molding (outer diameter: 63 mmφ, center shaft diameter: 30 mmφ, height: 245 mmH) having a large number of suction holes with diameters in the range of 3 mm, as shown in FIG. 1 described above. Using this, the slurry obtained by the method described above was sucked at 450 mmHg until the outer diameter reached 73 mmφ, thereby obtaining a premolded body. Thereafter, the outer surface of the obtained premolded body was rolled until the outer diameter of the premolded body reached 63 mmφ. Then, the molded body was dried, and finally, a hollow cylindrical molded body having an outer diameter of 63 mmφ, an inner diameter of 35 mmφ, and a height of 245 mmH was obtained.

Using the molded body of Example 1 thus produced, the density of the molded body, the volume of voids of the molded body, the total amount of acidic functional groups, and the caramel decoloring performance were measured by the methods described above. The measurement results of physical properties and performance of the molded body of Example 1 are summarized in Table 2 below.

A nonwoven fabric was wrapped around the outer periphery of the produced molded body, and a packing was bonded to each of both ends of the molded body. Further, the molded body, in which the nonwoven fabric has been wrapped and the packings have been bonded, was loaded into a transparent plastic housing having an average diameter of 79 mm, a length of about 250 mm, and an internal capacity of about 1200 ml. Using this, water was passed from the outside to the inside, and the PFAS removal performance was measured by the method described above. The measurement result of this performance is also shown in Table 2 below.

### <Example 2>

The powdered activated carbon B, a titanosilicate-based lead adsorbent, an acrylic fibrous binder, and a cellulose fibrous binder were prepared so that the total amount thereof was 1.2 kg at the blending ratio shown in Table 1 below, and tap water was added. The amount of slurry after addition was 20 L.

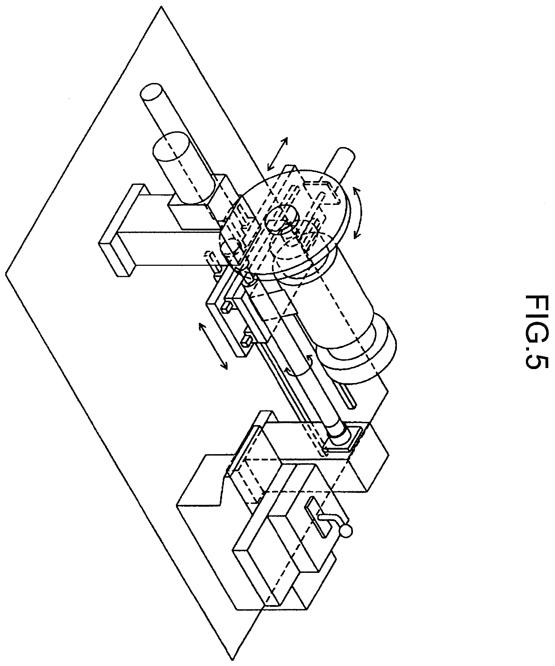

Then, a premolded body was obtained in the same manner as in Example 1 described above. Thereafter, the obtained premolded body was dried and then mounted on an automatic grinder shown in FIG. 5. The outer surface of the molded body was ground at a rotational speed of molded body of 360 rpm, a rotational speed of grindstone of 2535 rpm, and a moving speed of grindstone of 250 mm/10 sec (2.5 cm/sec) to obtain a hollow cylindrical molded body having an outer diameter of 63 mmφ, an inner diameter of 35 mmφ, and a height of 245 mmH.

Using the molded body of Example 2 thus produced, the physical properties and performance of the molded body were measured in the same manner as in Example 1 described above. The measurement results of physical properties and performance of the molded body are shown in Table 2 below.

### <Examples 3 to 7>

As shown in Table 1 below, in Example 3, a hollow cylindrical molded body was obtained in the same manner as in Example 2 except that the powdered activated carbon C was used instead of the powdered activated carbon B in the activated carbon as a raw material and the blending ratio was different. Further, in Examples 4 to 7, hollow cylindrical molded bodies were obtained in the same manner as in Example 2 except that the powdered activated carbon D to the powdered activated carbon G were used instead of the powdered activated carbon B in the activated carbon as a raw material, the titanosilicate-based lead adsorbent and the cellulose fibrous binder were not blended, and the blending ratio was different. Further, using the molded bodies of Examples 3 to 7 thus produced, the physical properties and performance of the molded bodies were measured in the same manner as in Example 1 described above. The measurement results of physical properties and performance of these molded bodies are summarized in Table 2 below.

### <Examples 8 and 9>

As shown in Table 1 below, in Example 8, a hollow cylindrical molded body was obtained in the same manner as in Example 1 except that the powdered activated carbon A and the acrylic fibrous binder having the same blending ratio as in Example 1 were prepared so that the total amount was 0.6 kg, and a slurry having a different solid content concentration was used. In Example 9, a hollow cylindrical molded body was obtained in the same manner as in Example 1 except that the powdered activated carbon A and the acrylic fibrous binder having the same blending ratio as in Example 1 were prepared so that the total amount was 2.0 kg, and a slurry having a different solid content concentration was used. Using the molded bodies of Examples 8 and 9 thus produced, the physical properties and performance of the molded bodies were measured in the same manner as in Example 1 described above. The measurement results of physical properties and performance of these molded bodies are summarized in Table 2 below.

### <Examples 10 and 11>

As shown in Table 1 below, in Example 10, a hollow cylindrical molded body was obtained in the same manner as in Example 6 except that the powdered activated carbon F and the acrylic fibrous binder having the same blending ratio as in Example 6 were prepared so that the total amount was 0.6 kg, and a slurry having a different solid content concentration was used. In Example 11, a hollow cylindrical molded body was obtained in the same manner as in Example 6 except that the powdered activated carbon F and the acrylic fibrous binder having the same blending ratio as in Example 6 were prepared so that the total amount was 2.0 kg, and a slurry having a different solid content concentration was used. Using the molded bodies of Examples 10 and 11 thus produced, the physical properties and performance of the molded bodies were measured in the same manner as in Example 1 described above. The measurement results of physical properties and performance of these molded bodies are summarized in Table 2 below.

### <Comparative Examples 1 and 2>

As shown in Table 1 below, in Comparative Example 1, a hollow cylindrical molded body was obtained in the same manner as in Example 2 except that the powdered activated carbon H was used instead of the powdered activated carbon B in the activated carbon as a raw material, the titanosilicate-based lead adsorbent and the cellulose fibrous binder were not blended, and the blending ratio was different. In Comparative Example 2, a hollow cylindrical molded body was obtained in the same manner as in Comparative Example 1 except that the powdered activated carbon H and the acrylic fibrous binder having the same blending ratio as in Comparative Example 1 were prepared so that the total amount was 0.6 kg, and a slurry having a different solid content concentration was used. Using the molded bodies of Comparative Examples 1 and 2 thus produced, the physical properties and performance of the molded bodies were measured in the same manner as in Example 1 described above. The measurement results of physical properties and performance of the molded bodies are summarized in Table 2 below.

The blending ratios at the time of producing the molded bodies of Examples and Comparative Examples are shown in the following Table 1.

**[Table 1]**

| | Blending ratio | | | | | | | | | | |
|---|---|---|---|---|---|---|---|---|---|---|---|
| | Powdered activated carbon A | Powdered activated carbon B | Powdered activated carbon C | Powdered activated carbon D | Powdered activated carbon E | Powdered activated carbon F | Powdered activated carbon G | Powdered activated carbon H | Titanosilicate-based lead adsorbent | Acrylic fibrous binder | Cellulose fibrous binder |
| | part by mass | part by mass | part by mass | part by mass | part by mass | part by mass | part by mass | part by mass | part by mass | part by mass | part by mass |
| Example 1 | 100 | - | - | - | - | - | - | - | - | 5.5 | - |
| Example 2 | - | 97 | - | - | - | - | - | - | 3 | 3 | 1.5 |
| Example 3 | - | - | 88 | - | - | - | - | - | 12 | 3 | 1.5 |
| Example 4 | - | - | - | 100 | - | - | - | - | - | 5.5 | - |
| Example 5 | - | - | - | - | 100 | - | - | - | - | 5.5 | - |
| Example 6 | - | - | - | - | - | 100 | - | - | - | 5.5 | - |
| Example 7 | - | - | - | - | - | - | 100 | - | - | 8 | - |
| Example 8 | 100 | - | - | - | - | - | - | - | - | 5.5 | - |
| Example 9 | 100 | - | - | - | - | - | - | - | - | 5.5 | - |
| Example 10 | - | - | - | - | - | 100 | - | - | - | 5.5 | - |
| Example 11 | - | - | - | - | - | 100 | - | - | - | 5.5 | - |
| Comparative Example 1 | - | - | - | - | - | - | - | 100 | - | 5 | - |
| Comparative Example 2 | - | - | - | - | - | - | - | 100 | - | 5 | - |

In Table 1 above, "-" means not contained. The amounts of the acrylic fibrous binder and the cellulose fibrous binder are expressed in part by mass with respect to 100 parts by mass of the total of the activated carbon as a raw material and the titanosilicate-based lead adsorbent.

The following Table 2 shows the physical properties of the activated carbon as a raw material, and the measurement results of physical properties and performance of the molded body produced in each of Examples and Comparative Examples.

**[Table 2]**

| | Physical properties of raw material activated carbon | | | | | | Physical properties of molded body | | | | | | Performance of molded body |
|---|---|---|---|---|---|---|---|---|---|---|---|---|---|
| | Particle size distribution | | | | Benzene saturated adsorption amount (%) | Proportion of pore volume of mesopores (%) | Density of molded body (g/cm³) | Mercury porosimeter | | | Total amount of acidic functional groups (meq/g) | Caramel decolorization rate (%) | PFOS and PFOA removal rate life (L/cc) |
| | D10(µm) | D50(µm) | D90(µm) | Content of particles having particle size of 50 to 100 µm (vol%) | | | | Total volume of voids (cm³/cc) | Volume of voids having diameter of 1 to 30 µm (cm³/cc) | Proportion of volume of voids having diameter of 1 to 30 µm (%) | | | |
| Example 1 | 39 | 123 | 197 | 25.6 | 32 | 7.1 | 0.41 | 0.61 | 0.49 | 80.8 | 0.17 | 73 | 30 |
| Example 2 | 34 | 106 | 184 | 31.4 | 29 | 9.9 | 0.45 | 0.62 | 0.51 | 82.2 | 0.21 | 47 | 30 |
| Example 3 | 16 | 38 | 86 | 25.1 | 30 | 6.7 | 0.51 | 0.67 | 0.58 | 85.9 | 0.30 | 39 | 30 |
| Example 4 | 78 | 146 | 228 | 20.1 | 42 | 9.0 | 0.30 | 0.72 | 0.16 | 22.7 | 0.32 | 94 | 24 |
| Example 5 | 64 | 149 | 223 | 17.4 | 45 | 11.6 | 0.35 | 0.69 | 0.23 | 33.1 | 0.24 | 90 | 30 or more |
| Example 6 | 81 | 139 | 212 | 20.8 | 30 | 6.7 | 0.35 | 0.72 | 0.15 | 20.8 | 0.15 | 51 | 17.6 |
| Example 7 | 26 | 54 | 97 | 39.1 | 51 | 20.8 | 0.22 | 0.86 | 0.54 | 62.8 | 0.57 | 94 | 30 or more |
| Example 8 | 39 | 123 | 197 | 25.6 | 32 | 7.1 | 0.40 | 0.71 | 0.55 | 78.3 | 0.19 | 69 | 30 or more |
| Example 9 | 39 | 123 | 197 | 25.6 | 32 | 7.1 | 0.39 | 0.71 | 0.38 | 54.1 | 0.16 | 66 | 30 or more |
| Example 10 | 81 | 139 | 212 | 20.8 | 30 | 6.7 | 0.36 | 0.72 | 0.15 | 20.6 | 0.20 | 58 | 30 or more |
| Example 11 | 81 | 139 | 212 | 20.8 | 30 | 6.7 | 0.36 | 0.73 | 0.15 | 20.6 | 0.20 | 53 | 30 or more |
| Comparative Example 1 | 148 | 222 | 305 | 1.7 | 27 | 10.2 | 0.38 | 0.67 | 0.09 | 13.1 | 0.33 | 53 | 11 |
| Comparative Example 2 | 148 | 222 | 305 | 1.7 | 27 | 10.2 | 0.40 | 0.72 | 0.11 | 14.8 | 0.17 | 52 | 6 |

### [Discussion]

As shown in Table 2 above, in the molded bodies of Examples 1 to 11, the proportion of the volume of voids having diameters in the range of 1 µm to 30 µm was 20% or more. The activated carbons (powdered activated carbons A to G) as the raw materials of the molded bodies of Examples 1 to 11 satisfied the conditions that the content of particles having a particle size of 50 µm to 100 µm was 10 vol% or more and D90 was 300 µm or less. As shown in Table 2 above, the molded bodies of Examples 1, 8, and 9 were produced using the same type and the same blending ratio of the activated carbon as a raw material and the binder, but since the solid content concentrations of the used slurries were different, the void structures of the molded bodies of respective Examples were different. The molded bodies of Examples 6, 10, and 11 also had different void structures for the same reason.

In the molded bodies of Comparative Examples 1 and 2, the proportion of the volume of voids having diameters in the range of 1 µm to 30 µm of the molded body was less than 20%. Further, the activated carbon (powdered activated carbon H) as a raw material of the molded bodies of Comparative Examples 1 and 2 did not satisfy either of the conditions that the content of particles having a particle size of 50 µm to 100 µm was 10 vol% or more and D90 was 300 µm or less. As shown in Table 2 above, the molded bodies of Comparative Examples 1 and 2 were also produced using the same type and the same blending ratio of the activated carbon as a raw material and the binder, but since the solid content concentrations of the used slurries were different, the void structures of the molded bodies were different.

In the molded bodies of Examples 1 to 11, the PFOS and PFOA removal rate life (L/cc) exceeded 15 L/cc which is the acceptance criterion, and PFAS could be removed satisfactorily. This is considered to be because the proportion of the volume of voids having diameters in the range of 1 µm to 30 µm of the molded body was large, and the particles of PFOS and PFOA sufficiently came into contact with voids having diameters in the range of 1 µm to 30 µm between activated carbon particles in the molded body and were adsorbed. It is considered that the activated carbons (powdered activated carbons A to G) as raw materials satisfied the conditions that the content of particles having a particle size of 50 µm to 100 µm was 10 vol% or more and D90 was 300 µm or less, and thus the proportion of the volume of voids having diameters in the range of 1 µm to 30 µm of the molded body could be increased.

As can be seen from the results of the benzene saturated adsorption amount in Table 2, in Examples 1 to 3 and Examples 8 to 11, although the degree of activation of the activated carbon as a raw material was lower than those in Examples 4, 5 and 7, the molded bodies were able to remove PFAS satisfactorily.

On the other hand, in the molded bodies of Comparative Examples 1 and 2, the PFOS and PFOA removal rate life (L/cc) was less than 15 L/cc which is the acceptance criterion, and the PFAS removal performance was poor. This is considered to be because the proportion of the volume of voids having diameters in the range of 1 µm to 30 µm of the molded bodies of Comparative Examples 1 and 2 was small, and PFOS and PFOA were not satisfactorily removed by the voids of the molded bodies. Further, it is considered that since the activated carbon (powdered activated carbon H) as a raw material did not satisfy any of the conditions that the content of particles having a particle size of 50 µm to 100 µm was 10 vol% or more and D90 was 300 µm or less, the proportion of the volume of voids having diameters in the range of 1 µm to 30 µm of the molded body could not be increased.

It should be understood that the embodiments and examples disclosed herein are illustrative and not restrictive in all respects. The scope of the present invention is indicated not by the above description but by the claims, and it is intended that meanings equivalent to the claims and all modifications within the scope are included.

This application is based on Japanese Patent Application No. 2024-021875 filed on February 16, 2024, the contents of which are incorporated in the present application.

In order to express the present invention, the present invention has been appropriately and sufficiently described through the embodiments and examples with reference to specific examples and the like in the foregoing, but it should be recognized that a person skilled in the art can easily change and/or improve the above-described embodiments and examples. Therefore, unless a change or improvement made by a person skilled in the art is at a level that departs from the scope of the claims described in the claims, the change or improvement is interpreted to be included in the scope of the claims.

### Industrial Applicability

The molded body in the present invention can suitably remove a fluorine-containing organic compound (PFAS), for example, by being used as a cylindrical water purification filter.

## Claims

1. A molded body comprising activated carbon and a binder,
wherein a volume of voids having diameters in the range of 1 µm to 30 µm in the molded body measured by mercury intrusion porosimetry is 20% or more of a volume of all voids in the molded body measured by mercury intrusion porosimetry.

2. The molded body according to claim 1, wherein in a volume-based cumulative particle size distribution of the activated carbon, a content of particles having a particle size of 50 µm to 100 µm is 10 vol% or more, and D90 is 300 µm or less.

3. The molded body according to claim 1, wherein a total amount of acidic functional groups in an activated carbon layer obtained by cutting out a part of the molded body is 0.7 meq/g or less.

4. The molded body according to claim 1, wherein a caramel decolorization rate of an activated carbon layer obtained by cutting out a part of the molded body is 35% or more.

5. The molded body according to claim 1, wherein a benzene saturated adsorption amount of the activated carbon is 25% to 60%.

6. The molded body according to claim 1, wherein a proportion of a pore volume of mesopores of the activated carbon calculated from a nitrogen adsorption isotherm by a BJH method in a total pore volume of the pore volume of mesopores of the activated carbon calculated from the nitrogen adsorption isotherm by the BJH method and a pore volume of micropores of the activated carbon calculated from the nitrogen adsorption isotherm by an MP method is 5% to 30%.

7. The molded body according to any one of claims 1 to 6, wherein the molded body is for removing a perfluoroalkyl compound and/or a polyfluoroalkyl compound.

8. A method for removing a perfluoroalkyl compound and/or a polyfluoroalkyl compound, comprising using the molded body according to any one of claims 1 to 6.
